# EUROPEAN PATENT SPECIFICATION

(11) **EP 3 310 716 B1**
(45) Date of publication and mention of the grant of the patent: **27.09.2023**
(21) Application number: 16815212.2
(22) Date of filing: 22.06.2016
(51) Int. Cl.: C02F 1/28, C02F 1/58, C02F 101/30, B01J 20/02, B01J 20/32, B01J 20/06, C02F 1/72

(54) **SURFACTANT REMOVAL FROM PRODUCED WATERS**
TENSIDENTFERNUNG AUS PRODUZIERTEN WÄSSERN
ÉLIMINATION DE TENSIOACTIF À PARTIR D'EAUX DE FORAGE

(30) Priority: 22.06.2015 US 201562182875 P
(43) Date of publication of application: 25.04.2018
(73) Proprietor: ConocoPhillips Company, Houston, Texas 77079 (US)
(72) Inventor: NEEDHAM, Riley B., Bartlesville, Oklahoma 74006 (US); SOLAIRAJ, Sriram, Bartlesville, Oklahoma 74105 (US)
(74) Representative: Simpson, Paul Christopher
(86) International application number: PCT/US2016/038744
(87) International publication number: WO 2016/209946

(56) References cited:
- WO-A2-2013/090569
- DE-A1-102008 038 475
- US-A- 5 843 308
- US-A1- 2015 144 564
- Marsalek ET AL: "The adsorption of SDS on ferro-precipitates", International Journal of Chemical, Molecular, Nuclear, Materials and Metallurgical Engineering, 1 January 2011 (2011-01-01), pages 872-874, XP055340489, Retrieved from the Internet: URL:http://www.waset.org/publications/3190 [retrieved on 2017-01-31]
- K Dao ET AL: "Adsorption Isotherm of Sodium Octylbenzenesulfonate on Iron Oxide Particles in Aqueous Solutions", Journal of Colloid And Interface Science, 1 January 1998 (1998-01-01), pages 61-65, XP055453469, DOI: 10.1006/jcis.1998.5526 Retrieved from the Internet: URL:https://www.sciencedirect.com/science/ article/pii/S0021979798955266 [retrieved on 2018-02-22]
- MARSALEK, R: 'The adsorption of SDS on ferro-precipitates.' INTERNATIONAL JOURNAL OF CHEMICAL, MOLECULAR, NUCLEAR, MATERIALS AND METALLURGICAL ENGINEERING. vol. 5, no. 10, 2011, pages 872 - 874, XP055340489
- SCHULZE-MAKUCH, D ET AL.: 'Field evaluation of the effectiveness of surfactant modified zeolite and iron-oxide-coated sand for removing viruses and bacteria from ground water.' GROUND WATER MONITORING & REMEDIATION. vol. 23, no. 4, 2003, pages 69 - 70, XP055340491
- FARAJNEZHAD, H ET AL.: 'Coagulation treatment of wastewater in petroleum industry using poly aluminum chloride and ferric chloride.' INTERNATIONAL JOURNAL OF RESEARCH AND REVIEWS IN APPLIED SCIENCES. vol. 13, no. 1, October 2012, XP055445396

## Description

### BACKGROUND OF THE INVENTION

A variety of industrial processes generate aqueous waste streams containing contaminating amounts of organic compounds. For example, in the process of crude oil production from subterranean formations, a substantial amount of water may be produced. Such oil-associated water generally contains contaminating compounds which must be removed prior to releasing the water into the environment. Other sources of produced water are encountered in the refining of crude oil. Plants which process oil products are increasingly limited by federal and state regulations as to the total organic content (e.g., soluble and dispersed hydrocarbons) of effluent water.

Surfactants are commonly used in a variety of subterranean industrial processes that generate aqueous waste streams. The surfactants can be used for a number of purposes, including as emulsifying agents, non-emulsifying agents, foaming agents, defoaming agents, viscosifying (e.g., gelling) agents, dispersants, wetting agents, and the like. While a variety of surfactants have been used in subterranean operations, various problems have been associated with their use. For instance, certain surfactants used heretofore often have undesirable environmental characteristics or may be limited by strict environmental regulations in certain areas of the world.

Thus, it is desirable to treat produced water so that it can be reused for various processes or discharged without violating environmental regulatory standards, particularly such that the surfactants are removed from the produced water. Older techniques for dealing with contaminated water involved reinjection into wells or percolation through a series of treatment ponds. These methods were unacceptable due to their high costs and environmental damage. Even so, these techniques continue to be used where no economical options exist.

Accordingly, there remains a continuing need in the art for a method of treating produced water to remove surfactants and be reused or discharged into the natural environment.

DE102008038475A1 discloses a method for treating water by passing it through fibrous activated carbon coated with hydrous iron oxide. Marsalek, et al "The adsorption of SDS on ferro-precipitates", International Journal of Chemical, Molecular, Nuclear, Materials and metallurgical Engineering, 1 January 2011, pp 872-874, describes the adsorption of a surfactant onto particles of iron oxide. WO2013090569A2 describes the treatment of produced water with diatomaceous earth coated with iron hydroxide. US20150144564A1 discloses a system for treating water. The system comprises a biochar inlet, and optionally a metal salt inlet, ozone inlet, organic carbon compound inlet or any combination thereof. The biochar may be produced by biomass pyrolysis and the pyrolysis may be coupled to energy generation. The system also comprises a filtration device, such as a reactive filtration device. The system produces a treated water stream and a reject stream, which may be further separated into a recycled water stream and a solid product. The solid product may be suitable as a soil amendment for application to agricultural land, or for recycling. A method for using the system to treat water also is disclosed.

### SUMMARY OF THE INVENTION

According to the invention, a method for removing a surfactant from a water stream is provided as set out in the appended claims

### BRIEF DESCRIPTION OF THE DRAWINGS

The invention, together with further advantages thereof, may best be understood by reference to the following description taken in conjunction with the accompanying figures by way of example and not by way of limitation, in which:
FIG. 1A is a chromatogram of a solution comprising a surfactant in water;
FIG. 1B is a chromatogram of a solution comprising a surfactant in water;
FIG. 2A is a chromatogram of a treated surfactant solution following contact with a hydrous iron oxide;
FIG. 2B is a chromatogram of a treated surfactant solution following contact with a hydrous iron oxide; and
FIG. 3 shows an overlay of a chromatogram of a surfactant solution (1) and a chromatogram of the same solution following treatment with a hydrous iron oxide (2).

### DETAILED DESCRIPTION OF THE INVENTION

Reference will now be made in detail to embodiments of the invention, one or more examples not in accordance with the invention are provided to help clarify the invention and are illustrated in the accompanying drawings. Each example is provided by way of explanation of the invention, not as a limitation of the invention. It will be apparent to those skilled in the art that various modifications and variation can be made in the present invention without departing from the scope of the invention as defined in the appended claims. For instance, features illustrated or described as part of one embodiment can be used on another embodiment to yield a still further embodiment. Thus, it is intended that the present invention cover such modifications and variations that come within the scope of the appended claims and their equivalents.

The present inventors have discovered a method for removing an anionic surfactant the method comprises removing an anionic surfactant comprising a C₄₋₂₅ alkyl-sulfonate, a C₆₋₂₅ alkylaryl sulfonate, a C₄₋₂₅ alkyl sulfate, or a salt thereof, or a combination comprising at least one of the foregoing from a produced water stream recovered from an oil well. The method comprises contacting the water steam with a particulate support comprising a hydrous iron oxide coating to provide a treated water stream having less surfactant than the initial water stream. Without being bound by theory, it is believed that the surfactant can adsorb to the hydrous iron oxide coating, effectively removing the surfactant from the water. Advantageously, the treated water stream can be readily discharged into the natural environment (e.g., in the ocean, a lake, a pond, or the like).

The method comprises contacting the water stream with a particulate support comprising a hydrous iron oxide coating. The contacting can comprise passing the water through the particulate support.

The water stream is a produced water stream. The term "produced water" as used herein refers to any waste water produced from an oil well as a byproduct of crude oil production containing trace amounts of contaminants such as oil- and water-soluble organic compounds, particularly those associated with an oil production process.

Produced water can include a number of contaminants that are generally known. The produced water stream comprises one or more surfactants.

The anionic surfactant includes a C₄₋₂₅ alkyl sulfonate, a C₆₋₂₅ alkylaryl sulfonate, a C₄₋₂₅ alkyl sulfate, or a salt thereof, or a combination comprising at least one of the foregoing anionic surfactants. Among the specific anionic surfactants that can be used are a C₄₋₂₂ alkyl or C₆₋₂₅ alkylaryl sulfonate (e.g., octyl sulfonate, lauryl sulfonate, myristyl sulfonate, hexadecyl sulfonate, 2-ethylhexyl sulfonate, docosyl sulfonate, tetracosyl sulfonate, p-tosylate, butylphenyl sulfonate, dodecylphenyl sulfonate, octadecylphenyl sulfonate, and dibutylphenyl, sulfonate, diisopropyl naphthyl sulfonate, and dibutylnaphthyl sulfonate), a C₄₋₂₂ alkyl sulfate (e.g., lauryl sulfate, lauryl ether sulfate (SLES), myreth sulfate, and dioctyl sulfosuccinate), or a salt thereof, or a combination comprising at least one of the foregoing anionic surfactants.

The surfactant can be present in the water stream in an amount of 50 to 400 parts per million (ppm), including approximately 50 ppm, 75 ppm, 100 ppm, 150 ppm, 200 ppm, 250 ppm, 300 ppm, 350 ppm, and 400 ppm.

The particulate support comprises a bed of moving sand. The filtration media in the process disclosed herein is sand due to its stability and cost effectiveness. Additional advantages of sand as the preferred filtration media include the well-known filtration properties of sand, its routine application in water treatment, its natural reactive silicate surface for iron oxide binding to form hydrous iron oxide-coated sand, and its abrasion properties.

The particulate support comprises a hydrous iron oxide coating. The hydrous iron oxide coating comprises one or more iron cations, oxide ions, hydroxide ions, an indeterminate quantity of water, or a combination comprising at least one of the foregoing. For example, the hydrous iron oxide coating can include an iron oxide, an iron hydroxide, an iron oxyhydroxide, a hydrated derivative thereof, or a combination comprising at least one of the foregoing. The hydrous iron oxide coating is prepared by contacting a hydrous iron oxide precursor with the particulate support.

The method comprises adding a hydrous iron oxide precursor to the water stream to form the iron oxide coating in situ. In such embodiments, the hydrous iron oxide coating on the particulate support can be formed from the hydrous iron oxide precursor in situ. In some embodiments, the hydrous iron oxide-coated particulate support can be formed prior to contacting the water stream with the particulate support.

The hydrous iron oxide precursor can include ferric chloride, ferrous chloride, ferric sulfate, ferrous sulfate, or a combination comprising at least one of the foregoing. The hydrous iron oxide precursor can be present in the water stream at a hydrous iron oxide precursor:surfactant molar ratio of 0.25:1 to 200:1. Within this range, the ratio can be at least 0.5:1, or 1:1, or 5:1. Also within this range, the ratio can be less than or equal to 100:1, or less than or equal to 50:1, or less than or equal to 10:1, or less than or equal to 5:1. For example, the ratio can preferably be 0.25:1 to 5:1, more preferably 0.25:1 to 1:1, even more preferably 0.5: 1 to 1:1.

The particulate support is present as a moving bed of sand. Without being bound by theory, it is believed that continuous motion of the particulate support can assist in continuous renewal of the hydrous iron oxide coating disposed on the surface of the sand. The physical action of the moving particulate support abrades the surface of the support particles, regenerating active sites for additional hydrous iron oxide precursor. Hence, regenerated reactive sites are continually presented to the water stream by microscopic erosion of the support surface. Abraded surfactant-iron-sand complexes can be removed by gravity separation, or by the screen filtering action of the sand bed. Gravity separation relies on the difference in densities between the water and the other components (e.g., the abraded surfactant-iron-sand complexes) for separation.

Movement can be accomplished, for example, by fluidizing or moving the bed using the fluid flow, by mechanical action such as augers or mixing bars, by acoustic action such as the application of ultrasonic waves or by physical transport using compressed air. In an embodiment, movement is accomplished by fluidizing the bed using compressed air.

The method further comprises separating the treated water stream from the particulate support. In some embodiments, the surfactant can be adsorbed to the hydrous iron oxide coating to provide a surfactant-iron-sand complex, and the treated water stream can be separated from the surfactant-iron-sand complex. The separating can be by, for example, filtering, centrifuging, decanting, gravity separating, and the like, or a combination comprising at least one of the foregoing separating methods, preferably by gravity separating.

The treated water stream exiting the sand bed comprises less surfactant than the water stream. For example, the treated water stream can have less than 1 weight percent, or less than 0.5 weight percent, or less than 0.1 weight percent, or less than 0.05 weight percent, or less than 0.005 weight percent residual surfactant. In some embodiments, the treated water stream has 50 ppm or less of a surfactant, for example 50 ppm or less of an anionic surfactant. In some embodiments, the treated water exiting the sand bed is devoid of residual surfactant. Thus the treated water stream exiting the sand bed can include an amount of surfactant that is less than the amount of surfactant that is believed to have an environmental impact.

In some embodiments, the method comprises at least partially degrading the surfactant. The terms "degradation", "degradable", or "degrading" refer to the conversion of materials into smaller components, intermediates, or end products by the result of hydrolytic degradation, biologics (e.g., bacteria or enzymes), chemical reactions, thermal reactions, reactions induced by radiation, and the like, or a combination comprising at least one of the foregoing. In some embodiments, the degradation is preferably by chemical reaction, for example, oxidative degradation. Oxidative degradation of surfactants can be by addition of an oxidizing agent, for example ozone, ferrate(IV), or a combination comprising at least one of the foregoing.

In some embodiments, the surfactant can be at least partially degraded, and the degraded surfactant adsorbed to the hydrous iron oxide coating to provide a degraded surfactant-iron-sand complex. In some embodiments, the surfactant can be adsorbed to the hydrous iron oxide coating to provide a surfactant-iron-sand complex, and the surfactant of the surfactant-iron-sand complex can be at least partially degraded. In some embodiments wherein the treated water stream comprises residual surfactant, the method can further comprise at least partially degrading the residual surfactant of the treated water stream, for example after the treated water stream is separated from the particulate support.

In general, there are no particular requirements on the pH of the water. In some embodiments, the produced water can be used directly (e.g., as recovered from an oil well) without adjusting the pH prior to contacting the water stream with the bed of moving sand. In some embodiments, the produced water can contact the moving sand bed at a pH of 2 to 14, preferably 4 to 12, more preferably 5 to 10. In general, there are no particular requirements on the temperature of the produced water stream entering the sand bed. In some embodiments, the temperature of the produced water stream entering the sand bed is 20 to 100°C, preferably 70 to 95°C. In some embodiments, the temperature of the produced water stream entering the sand bed is greater than or equal to 100°C, for example in a pressurized system.

In some embodiments, the water stream can be pretreated prior to contacting the moving sand bed or prior to adding the hydrous iron oxide precursor. The water stream can generally be treated by any process that can be utilized in the normal processing of produced water, including by filtration, deionization, softening, aeration, chemical treatment, flocculation, clarification, oxidation, blending with an alternate water source, and the like, or a combination comprising at least one of the foregoing treatments. For example, the water can be oxidized prior to introducing the hydrous iron oxide precursor to the water stream. Oxidizing the water can be by aeration or addition of Fenton's reagent, ozone, hydrogen peroxide plus ozone, ultraviolet radiation treatment, or any other oxidation method that is generally known.

In some embodiments, the method further comprises discharging the treated water stream into the natural environment, for example, the ocean. Of course the stream may also be recirculated for use in the process producing the stream, or discharged to a holding pond, holding, tank, or the like.

The method for removing a surfactant from produced waters disclosed herein advantageously allows for a continuous method for removing surfactants. In embodiments wherein the hydrous iron oxide-coated particulate support can be continuously regenerated due to the use of the moving bed, there is no downtime associated with reagent replacement or regeneration. Additionally, the successful removal of the surfactants from the produced water allows for discharge of the treated water into the natural environment, for example by "over-boarding" into the ocean.

### EXAMPLES

In the following example, which is not in accordance with the invention but which is provided to help clarify the invention, a surfactant was removed from a water stream using low concentrations of ferric chloride. The water stream included a surfactant and deionized (DI) water. The surfactant used for the following example was a C₁₉₋₂₃ internal olefin sulfonate available from Shell under the trade name ENORDET O342. ENORDET O342 is an exemplary surfactant used in formulations for enhanced oil recovery (EOR).

A solution of ENORDET O342 in DI water was prepared at a concentration of 2000 ppm. It should be noted that while a relatively high concentration of 2000 ppm of surfactant was used for this example, produced water streams are expected to contain surfactants in significantly lower concentrations (e.g., 50 to 500 ppm).

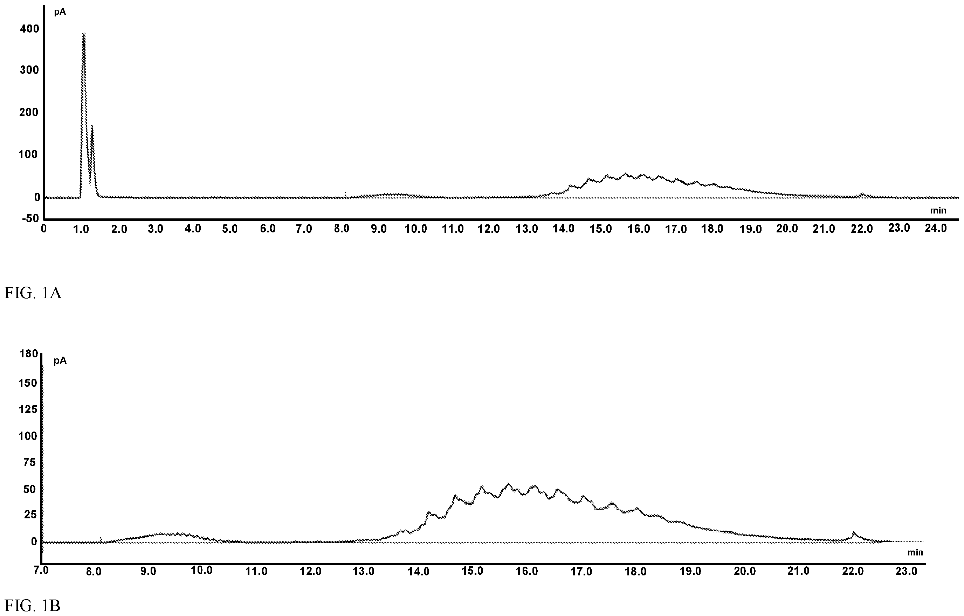

High performance liquid chromatography (HPLC) was used to characterize the surfactant-containing solution. FIG. 1A shows the HPLC chromatogram of the 2000 ppm solution of ENORDET O342 in DI water. The surfactant was eluted from 8 to 23 minutes. FIG. 1B shows a magnified section the HPLC chromatogram to better visualize the surfactant peak. The peak area for the surfactant was 217.53 pA*minute.

Ferric chloride (372 ppm) was added to the surfactant-containing solution to demonstrate the interaction of the surfactant with hydrous iron oxide.

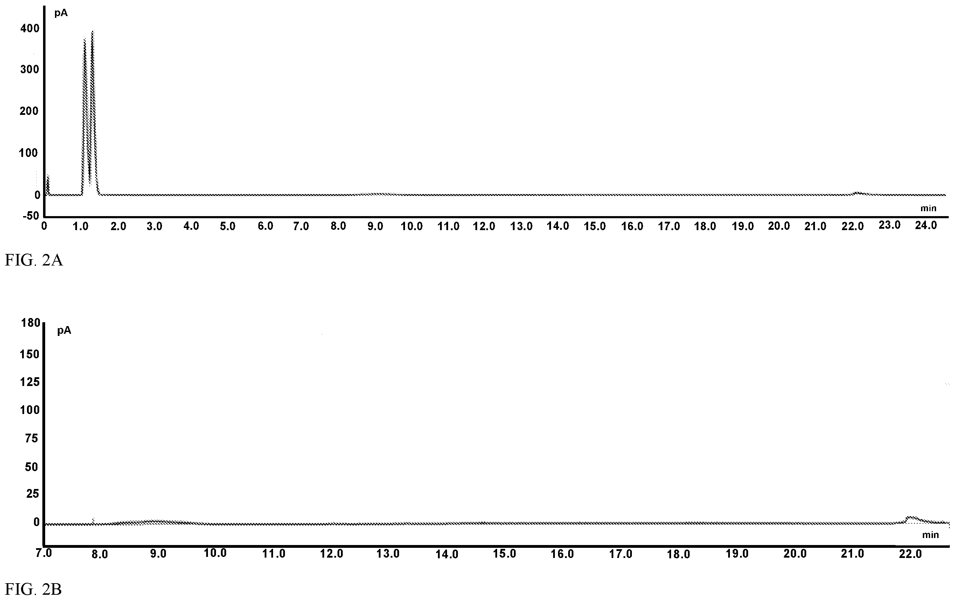

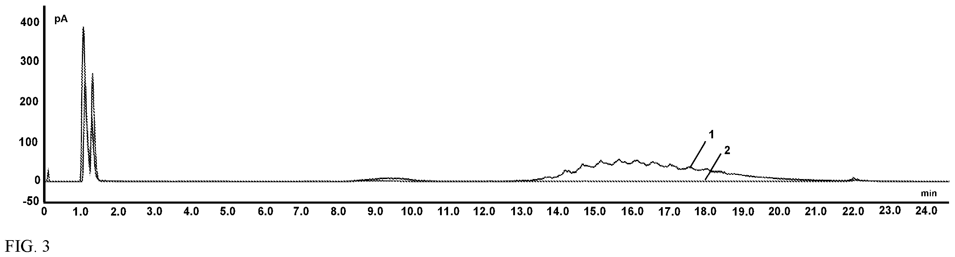

The iron-containing solution was then filtered through a 0.22 micrometer filter to remove the iron, and any adsorbed surfactant. The filtrate was characterized using HPLC (FIG. 2A). FIG. 2B shows a magnified section the HPLC chromatogram of FIG. 2A. FIG. 2A and 2B show that there is no measureable surfactant peak in the HPLC chromatogram of the treated solution, indicating that the surfactant concentration has been reduced to below the detection limit (approximately 50 ppm). The peak area for the surfactant in the chromatogram of FIG. 2B was 4.05 pA*minute, a 98% reduction in the amount of surfactant compared to the initial surfactant-containing solution. FIG. 3 shows an overlay of the HPLC chromatograms of the initial surfactant-containing solution (1) and the treated solution (2), further demonstrating that the surfactant was effectively removed by treatment with hydrous iron oxide.

While the invention has been described in detail in connection with only a limited number of embodiments, it should be readily understood that the invention is not limited to such disclosed embodiments. Rather, the invention can be modified to incorporate any number of variations, alterations, substitutions, or equivalent arrangements not heretofore described, but which are commensurate with the scope of the invention as defined in the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for treatment of a produced water stream recovered from an oil well to remove a surfactant from the water stream, **characterized by**:
contacting the water stream with a particulate support comprising a hydrous iron oxide coating, to provide a treated water stream comprising less surfactant than the water stream; and
adding a hydrous iron oxide precursor to the water stream to form the hydrous iron oxide coating;
wherein the particulate support comprises a bed of moving sand;
**characterized in that**:
the method comprises removing an anionic surfactant comprising a C₄₋₂₅ alkyl sulfonate, a C₆₋₂₅ alkylaryl sulfonate, a C₄₋₂₅ alkyl sulfate, or a salt thereof, or a combination comprising at least one of the foregoing from the water stream;
the method further comprising:
adsorbing the anionic surfactant to the hydrous iron oxide coating to provide a surfactant-iron-sand complex; and
separating the treated water stream from the particulate support.

2. The method of claim 1, wherein the surfactant is present in the water stream in an amount of 50 to 400 ppm.

3. The method of claim 1 or 2, wherein the hydrous iron oxide precursor comprises ferric chloride, ferrous chloride, ferric sulfate, ferrous sulfate, or a combination comprising at least one of the foregoing.

4. The method of any one or more of claims 1 to 3, wherein the hydrous iron oxide precursor is present in the water stream at a hydrous iron oxide precursor:surfactant molar ratio of 0.25:1 to 5:1, preferably 0.25:1 to 1:1, more preferably 0.5:1 to 1:1.

5. The method of any one or more of claims 1 to 4, wherein
the hydrous iron oxide precursor comprises ferric chloride; and
the surfactant is an anionic surfactant in an amount of 50 to 400 ppm.

6. The method of any one or more of claims 1 to 5, comprising oxidizing the water stream prior to introducing the hydrous iron oxide precursor to the water stream.

## Patentansprüche

1. Verfahren zur Behandlung eines produzierten Wasserstroms, der aus einem Ölbohrloch gewonnen wird, um ein Tensid aus dem Wasserstrom zu entfernen, **gekennzeichnet durch**:
Inkontaktbringen des Wasserstroms mit einem partikelförmigen Träger, der eine wasserhaltige Eisenoxidbeschichtung umfasst, um einen behandelten Wasserstrom bereitzustellen, der weniger Tensid umfasst als der Wasserstrom; und
Zugeben eines wasserhaltigen Eisenoxidvorläufers zu dem Wasserstrom, um die wasserhaltige Eisenoxidbeschichtung zu bilden;
wobei der partikelförmige Träger ein Bett aus sich bewegendem Sand umfasst;
**dadurch gekennzeichnet, dass**:
das Verfahren das Entfernen eines anionischen Tensids, das ein C₄₋₂₅-Alkylsulfonat, ein C₆₋₂₅-Alkylarylsulfonat, ein C₄₋₂₅-Alkylsulfat oder ein Salz davon oder eine Kombination umfasst, die mindestens eines der Vorstehenden umfasst, aus dem Wasserstrom umfasst;
wobei das Verfahren weiter umfasst:
Adsorbieren des anionischen Tensids an die wasserhaltige Eisenoxidbeschichtung, um einen Tensid-Eisen-Sand-Komplex bereitzustellen; und
Abtrennen des behandelten Wasserstroms von dem partikelförmigen Träger.

2. Verfahren nach Anspruch 1, wobei das Tensid in einer Menge von 50 bis 400 ppm im Wasserstrom vorliegt.

3. Verfahren nach Anspruch 1 oder 2, wobei der wasserhaltige Eisenoxidvorläufer Eisen(III)-chlorid, Eisen(II)-chlorid, Eisen(III)-sulfat, Eisen(II)-sulfat oder eine Kombination umfasst, die mindestens eines der Vorstehenden umfasst.

4. Verfahren nach einem oder mehreren der Ansprüche 1 bis 3, wobei der wasserhaltige Eisenoxidvorläufer in einem Molverhältnis wasserhaltiger Eisenoxidvorläufer:Tensid von 0,25:1 bis 5:1, bevorzugt 0,25:1 bis 1:1, bevorzugter 0,5:1 bis 1:1, im Wasserstrom vorliegt.

5. Verfahren nach einem oder mehreren der Ansprüche 1 bis 4, wobei
der wasserhaltige Eisenoxidvorläufer Eisen(III)-chlorid umfasst; und
das Tensid ein anionisches Tensid in einer Menge von 50 bis 400 ppm ist.

6. Verfahren nach einem oder mehreren der Ansprüche 1 bis 5, das das Oxidieren des Wasserstroms vor Einbringen des wasserhaltigen Eisenoxidvorläufers in den Wasserstrom umfasst.

## Revendications

1. Procédé pour le traitement d'un flux d'eau de production récupéré d'un puits de pétrole pour éliminer un agent tensioactif du flux d'eau, **caractérisée par** :
la mise en contact du flux d'eau avec un support particulaire comprenant un revêtement d'oxyde de fer hydraté, pour fournir un flux d'eau traité comprenant moins d'agent tensioactif que le flux d'eau ; et
l'ajout d'un précurseur d'oxyde de fer hydraté au flux d'eau pour former le revêtement d'oxyde de fer hydraté ;
dans lequel le support particulaire comprend un lit de sable mouvant ;
**caractérisé en ce que** :
le procédé comprend l'étape consistant à éliminer du flux d'eau un agent tensioactif anionique comprenant un sulfonate d'alkyle C₄₋₂₅, un alkylaryl sulfonate C₆₋₂₅, un sulfate d'alkyle C₄₋₂₅, ou un sel de ceux-ci, ou une combinaison comprenant au moins l'un des éléments précédents ;
le procédé comprenant en outre :
l'adsorption du tensioactif anionique sur le revêtement d'oxyde de fer hydraté pour obtenir un complexe tensioactif-fer-sable ; et
la séparation du flux d'eau traité du support particulaire.

2. Procédé selon la revendication 1, dans lequel l'agent tensioactif est présent dans le flux d'eau en une quantité comprise entre 50 et 400 ppm.

3. Procédé selon la revendication 1 ou 2, dans lequel le précurseur d'oxyde de fer hydraté comprend du chlorure ferrique, du chlorure ferreux, du sulfate ferrique, du sulfate ferreux ou une combinaison comprenant au moins l'un des éléments précédents.

4. Procédé selon l'une ou plusieurs des revendications 1 à 3, dans lequel le précurseur d'oxyde de fer hydraté est présent dans le flux d'eau à un rapport molaire précurseur d'oxyde de fer hydraté:tensioactif de 0,25:1 à 5:1, de préférence de 0,25:1 à 1:1, plus préférentiellement de 0,5:1 à 1:1.

5. Procédé selon l'une ou plusieurs des revendications 1 à 4, dans lequel
le précurseur d'oxyde de fer hydraté comprend du chlorure ferrique ; et
l'agent tensioactif est un agent tensioactif anionique en une quantité comprise entre 50 à 400 ppm.

6. Procédé selon l'une ou plusieurs des revendications 1 à 5, comprenant l'oxydation du flux d'eau avant l'introduction du précurseur d'oxyde de fer hydraté dans le flux d'eau.
